(19) **Europäisches Patentamt / European Patent Office / Office européen des brevets**

(11) **EP 4 697 579 A1**

(12) **EUROPEAN PATENT APPLICATION**
published in accordance with Art. 153(4) EPC

(43) Date of publication:
**18.02.2026 Bulletin 2026/08**

(21) Application number: **24788670.8**

(22) Date of filing: **05.04.2024**

(51) International Patent Classification (IPC):
**H02M 3/28** (2006.01)

(52) Cooperative Patent Classification (CPC):
**H02M 3/28**

(86) International application number:
**PCT/JP2024/014075**

(87) International publication number:
**WO 2024/214646 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.04.2023 JP 2023064166**

(71) Applicant: **GS Yuasa International Ltd.**
**Kisshoin, Minami-ku,**
**Kyoto-shi, Kyoto 601-8520 (JP)**

(72) Inventor: **CHIBA, Akiteru**
**Kyoto-shi, Kyoto 601-8520 (JP)**

(74) Representative: **Isarpatent**
**Patent- und Rechtsanwälte Partg mbB**
**Friedrichstraße 31**
**80801 München (DE)**

(54) **POWER CONVERTER, METHOD FOR CONTROLLING POWER CONVERTER, CHARGING DEVICE, AND VEHICLE**

(57) A power converter 1 that converts a direct-current voltage Vin into an output voltage Vo by a switching operation of an upper switch element QH and a lower switch element QL using an LLC circuit 10 including a resonant inductor Lr connected to a connection point between the upper switch element QH and the lower switch element QL connected in series between a positive electrode and a negative electrode of the direct-current voltage Vin, a primary winding N1 of a transformer T, and a resonant capacitor Cr, the power converter 1 including: the LLC circuit 10 of each of a plurality of stages in which secondary windings N2 of the transformers T are connected in series; and a control unit 30 that causes a series resonant circuit of the resonant inductor Lr and the resonant capacitor Cr to be formed in any one or more of the LLC circuits 10 of the plurality of stages and causes the other LLC circuit 10 to perform the switching operation.

Fig. 2

EP 4 697 579 A1

**Description**

TECHNICAL FIELD

The present invention relates to a power converter that converts a direct-current voltage into a desired output voltage.

BACKGROUND ART

A battery charger that charges, with charge, a storage battery (battery) mounted on an electric vehicle or the like often adopts an efficient LLC circuit (resonant circuit) (see, for example, Patent Document 1). The LLC circuit has an efficient input/output range, and the efficiency deteriorates significantly outside the input/output range.

PRIOR ART DOCUMENT

PATENT DOCUMENT

Patent Document 1: JP-A-2012-249375

SUMMARY OF THE INVENTION

PROBLEMS TO BE SOLVED BY THE INVENTION

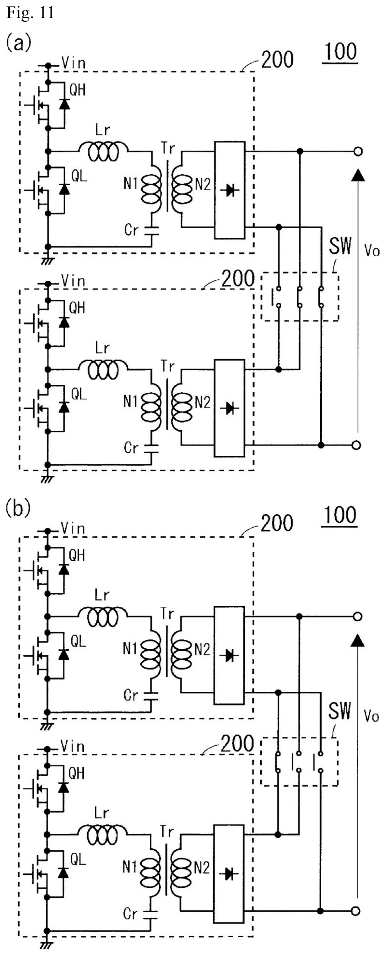

By providing a plurality of LLC circuits and switching outputs to parallel connection or series connection, the efficient input/output range can be obtained. A power converter 100 illustrated in Fig. 11 includes two half-bridge LLC converters (hereinafter, referred to as LLC circuits 200) and a changeover switch SW. The changeover switch SW switches the outputs of the two LLC circuits 200 to series connection or parallel connection. In Fig. 11, (a) illustrates a state in which the outputs of the two LLC circuits 200 are connected in parallel, and (b) illustrates a state in which the two outputs are connected in series.

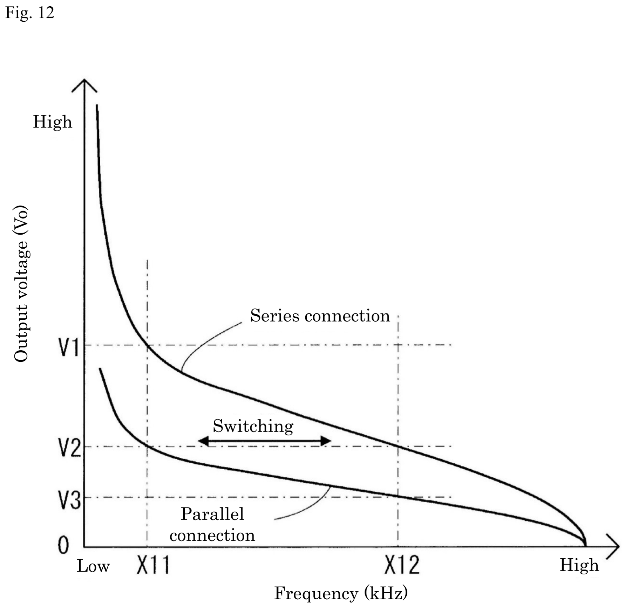

An output voltage Vo of the LLC circuit 200 changes according to a switching frequency. Fig. 12 illustrates an example of output characteristics of the switching frequency and the output voltage Vo, in which the frequency greatly increases at a low-voltage output. The output characteristics of the two LLC circuits 200 are different between the case of parallel connection and the case of series connection. When an operating range (hereinafter, referred to as an operating frequency range) of the switching frequency is X11 to X12 (X11 < X12), the output range of the output voltage Vo is V1 to V2 (V1 > V2) in series connection, and V2 to V3 (Y2 > Y3) in parallel connection. By switching between parallel connection and series connection at the output voltage Vo = V2 by the changeover switch SW, the output range of the output voltage Vo can be widened to V1 to V3 with respect to the operating frequency range X1 to X2.

However, since the changeover switch SW needs to be provided on the output side of the LLC circuit 200 to which a storage battery is connected, a surge current having large energy such as a storage battery short circuit due to a circuit failure may occur. Therefore, it is necessary to use a mechanical relay as the changeover switch SW, and a semiconductor switch cannot be used. The mechanical relay is expensive, large in size, and cannot be replaced by the semiconductor switch, which is inexpensive and small in size.

An aspect of the present invention is to provide a power converter, a method for controlling a power converter, a battery charger, and a vehicle capable of widening an output range of an output voltage with respect to an operating frequency range without providing a changeover switch on an output side.

MEANS FOR SOLVING THE PROBLEMS

A power converter according to an aspect of the present invention includes an LLC converter including an upper switch element and a lower switch element connected in series between a positive electrode and a negative electrode of a direct-current voltage. The LLC converter includes a resonant inductor connected to a connection point between the upper switch element and the lower switch element, a primary winding of a transformer, and a resonant capacitor. The power converter converts the direct-current voltage into an output voltage by a switching operation of the upper switch element and the lower switch element using the LLC converter. The power converter includes the LLC converter of each of a plurality of stages in which secondary windings of the transformers are connected in series. The power converter includes a control unit that causes a series resonant circuit of the resonant inductor and the resonant capacitor to be formed in any one or more of the LLC converters of the plurality of stages and causes the other LLC converter to perform the switching operation.

A method for controlling a power converter according to an aspect of the present invention is a method for controlling a power converter that converts a direct-current voltage into an output voltage by a switching operation of an LLC converter. The power converter includes the LLC converter including an upper switch element and a lower switch element connected in series between a positive electrode and a negative electrode of the direct-current voltage. The LLC converter includes a resonant inductor connected to a connection point between the upper switch element and the lower switch element, a primary winding of a transformer, and a resonant capacitor. The power converter converts the direct-current voltage into the output voltage by a switching operation of the upper switch element and the lower switch element using the LLC converter. The power converter includes the LLC converter of each of a plurality of stages in which secondary windings of the transformers are connected in series. When the output voltage is less than a threshold voltage, the power converter forms a series resonant circuit of the resonant inductor and the resonant capacitor in any one or more of the LLC converters of the plurality of stages, and performs the switching operation on the other LLC converter.

ADVANTAGES OF THE INVENTION

According to the aspect of the present invention, the range of the output voltage Vo that can be output in the operating frequency range can be widened without providing the changeover switch on the output side. The operating frequency range can be set to a narrow range near a resonance frequency, and the conversion efficiency can be improved.

BRIEF DESCRIPTION OF THE DRAWINGS

Fig. 1 is a diagram illustrating an example of use of a power converter as a battery charger.
Fig. 2 is a diagram illustrating a configuration example of the power converter.
Fig. 3 is a diagram illustrating the power converter during an independent operation.
Fig. 4 is a diagram illustrating a change in impedance.
Fig. 5 is a diagram illustrating an example of output characteristics of the power converter illustrated in Fig. 2.
Fig. 6 is a diagram illustrating a configuration example of a power converter having a three-stage configuration.
Fig. 7 is a diagram illustrating the power converter illustrated in Fig. 6 during a two-circuit series connection operation and an independent operation.
Fig. 8 is a diagram illustrating an example of output characteristics of the power converter illustrated in Fig. 6.
Fig. 9 is a diagram illustrating a configuration example of a multiphase LLC converter.
Fig. 10 is a diagram illustrating another configuration example of the multiphase LLC converter.
Fig. 11 is a diagram illustrating a configuration example of a conventional power converter.
Fig. 12 is a diagram illustrating an example of output characteristics of the conventional power converter illustrated in Fig. 11.

MODE FOR CARRYING OUT THE INVENTION

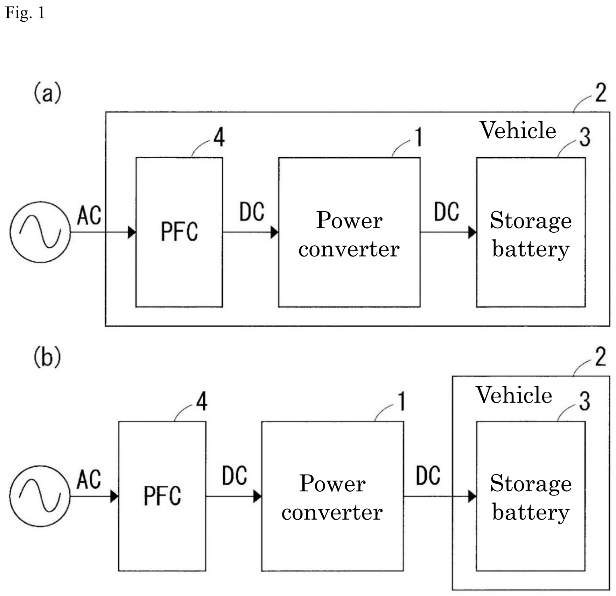

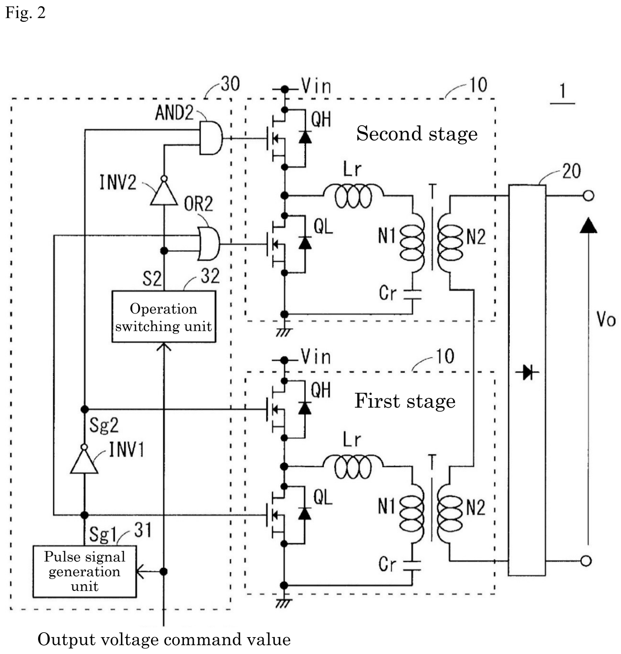

Hereinafter, embodiments of the present invention will be described in detail with reference to the drawings. In the following embodiments, identical reference numerals are given to the configurations indicating the same functions, and the description thereof is appropriately omitted.
Referring to Fig. 1, a power converter 1 of the present embodiment is used as a battery charger that charges, with charge, a storage battery 3 (battery) mounted on a vehicle 2 such as an electric vehicle.
As illustrated in Fig. 1(a), when power supplied to the vehicle 2 from outside the vehicle is an alternating-current (AC) voltage of a commercial power supply or the like, the power converter 1 is mounted on the vehicle 2 together with a PFC (power factor correction circuit) 4. The PFC 4 converts the alternating-current voltage supplied to the vehicle 2 into a direct-current (DC) voltage, and the power converter 1 converts the direct-current voltage converted by the PFC 4 into a desired output voltage to charge the storage battery 3.
As illustrated in Fig. 1(b), when the power supplied to the vehicle 2 from outside the vehicle is a direct-current voltage, the power converter 1 is installed in a facility outside the vehicle 2 such as a charging station together with the PFC (power factor correction circuit) 4. The PFC 4 converts the alternating-current voltage supplied from a commercial power supply or the like into a direct-current (DC) voltage, and the power converter 1 converts the direct-current voltage converted by the PFC 4 into a desired direct-current voltage and supplies the direct-current voltage to the vehicle 2 to charge the storage battery 3.
Referring to Fig. 2, the power converter 1 has a two-stage configuration including two half-bridge LLC converters (hereinafter, referred to as LLC circuits 10), and includes a rectifier 20 and a control unit 30.
In the LLC circuit 10, an upper switch element QH and a lower switch element QL are connected in series as switching legs between a positive electrode and a negative electrode of a direct-current voltage Vin. Each of the upper switch element QH and the lower switch element QL includes, for example, a field-effect transistor (MOSFET: metal-oxide-semiconductor field-effect transistor). Each of the upper switch element QH and the lower switch element QL includes a body diode between a source and a drain. As each of the upper switch element QH and the lower switch element QL, a switching element such as an IGBT (Insulated Gate Bipolar Transistor), a GaN device, or a SiC (Silicon Carbide) device may be used.

The upper switch element QH connected to the positive electrode of the direct-current voltage Vin is an upper arm of the switching leg. The lower switch element QL connected to the negative electrode side of the direct-current voltage Vin is a lower arm of the switching leg.

The LLC circuit 10 includes a resonant inductor Lr having one end connected to a connection point between the upper switch element QH and the lower switch element QL. The LLC circuit 10 includes a transformer T and a resonant capacitor Cr. A primary winding N1 of the transformer T and the resonant capacitor Cr are connected in series between the other end of the resonant inductor Lr and the negative electrode of the direct-current voltage Vin.

In the transformers T of the two LLC circuits 10, secondary windings N2 are connected in series. Hereinafter, the two LLC circuits 10 in which the secondary windings N2 of the transformers T are connected in series will be referred to as the first stage and the second stage when distinguished.

The rectifier 20 rectifies an alternating current output from the secondary windings N2 connected in series, and outputs the rectified alternating current from a high-potential output terminal and a low-potential output terminal. The rectifier 20 can adopt circuit methods such as center tap rectification, bridge rectification, voltage doubler rectification, and Cock-Walton rectification. In addition, the rectifier 20 can also perform synchronous rectification using an FET instead of a diode. The rectifier 20 may include an output capacitor connected between the high-potential output terminal and the low-potential output terminal. In this case, the rectifier 20 forms a rectifying and smoothing circuit together with an output capacitor Co.

The control unit 30 is a semiconductor device integrated on a semiconductor substrate, and generates pulse signals Sg2 and Sg1 for driving the switching legs (the upper switch elements QH and the lower switch elements QL) of the LLC circuits 10 of the first stage and the second stage based on an output voltage command value.

The control unit 30 includes a pulse signal generation unit 31 and an inverter circuit INV1. The pulse signal generation unit 31 generates the pulse signal Sg1 for driving the lower switch elements QL in the LLC circuits 10 of the first stage and the second stage based on the output voltage command value. The inverter circuit INV1 inverts the pulse signal Sg1 and generates the pulse signal Sg2 for driving the upper switch elements QH in the LLC circuits 10 of the first stage and the second stage. The pulse signal generation unit 31 decreases the output voltage Vo by increasing the switching frequency of the pulse signal Sg1 (pulse signal Sg2) and increases the output voltage Vo by decreasing the switching frequency by frequency control.

The control unit 30 includes an operation switching unit 32, an OR circuit OR2, an AND circuit AND2, and an inverter circuit INV2. The operation switching unit 32 outputs a two-stage operation switching signal S2 that is at Low level when the output voltage command value is equal to or higher than a threshold voltage Vth and is at Hi level when the output voltage command value is less than the threshold voltage Vth.

In the OR circuit OR2, the pulse signal Sg1 is input to one input terminal, the two-stage operation switching signal S2 is input to the other input terminal, and an output terminal is connected to the lower switch element QL in the LLC circuit 10 of the second stage. In the AND circuit AND2, the pulse signal Sg1 is input to one input terminal, the two-stage operation switching signal S2 inverted by the inverter circuit INV2 is input to the other input terminal, and an output terminal is connected to the upper switch element QH in the LLC circuit 10 of the second stage.

When the output voltage command value is equal to or higher than the threshold voltage Vth, the two-stage operation switching signal S2 is at Low level. Low level is input to the other input terminal of the OR circuit OR2, and Hi level is input to the other input terminal of the AND circuit AND2. Therefore, the upper switch element QH and the lower switch element QL in the LLC circuit 10 of the second stage are driven by the pulse signal Sg2 and the pulse signal Sg1, respectively, similarly to the LLC circuit 10 of the first stage. The power converter 1 performs a series connection operation in which both the LLC circuits 10 of the first stage and the second stage connected in series perform a switching operation.

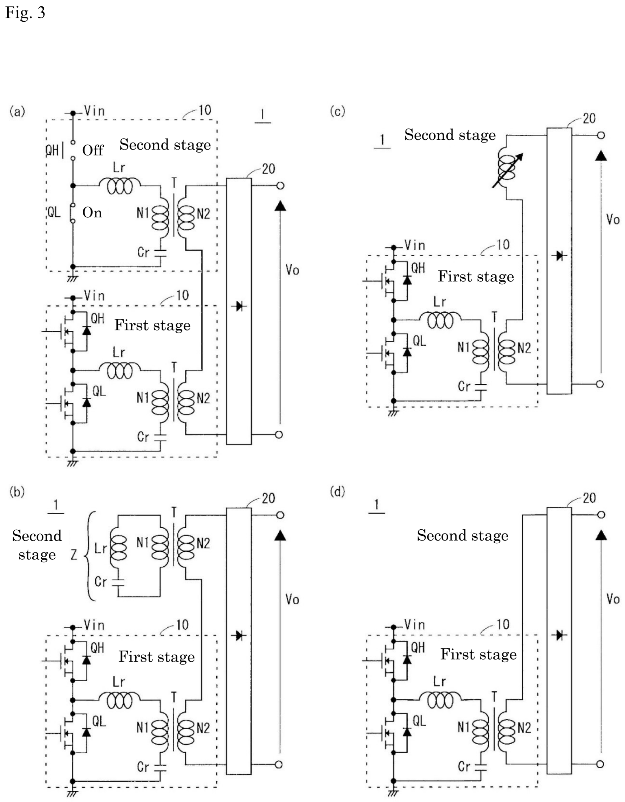

When the output voltage command value is less than the threshold voltage Vth, the two-stage operation switching signal S2 is at Hi level. Hi level is input to the other input terminal of the OR circuit OR2, and Low level is input to the other input terminal of the AND circuit AND2. Therefore, as illustrated in Fig. 3(a), in the LLC circuit 10 of the second stage, the upper switch element QH is in an always-off state, and the lower switch element QL is in an always-on state. The power converter 1 performs an independent operation in which the LLC circuit 10 of the second stage forms a series resonant circuit of the resonant inductor Lr and the resonant capacitor Cr, and only the LLC circuit 10 of the first stage performs a switching operation.

By bringing the lower switch element QL into the always-on state, the series resonant circuit of the resonant inductor Lr and the resonant capacitor Cr is formed in the LLC circuit 10 of the second stage as illustrated in Fig. 3(b). An impedance Z of the series resonant circuit of the resonant inductor Lr and the resonant capacitor Cr is expressed by Equation (1) below. In Equation (1), ω is an angular frequency, and is expressed by ω = 2πf using a frequency f.
[Equation 1]

$$Z = \left| \omega Lr - \frac{1}{\omega Cr} \right| = \left| 2\pi f \cdot Lr - \frac{1}{2\pi f \cdot Cr} \right| \quad --- (1)$$

The impedance Z when the angular frequency ω is ωr shown in Equation (2) below is zero as shown in Equation (3) below.
[Equation 2]

$$\omega = \omega r = \frac{1}{\sqrt{Lr \cdot Cr}} \quad --- (2)$$

[Equation 3]

$$Z = \left| \omega Lr - \frac{1}{\omega Cr} \right| = \left| \frac{1}{\sqrt{Lr \cdot Cr}} Lr - \frac{\sqrt{Lr \cdot Cr}}{Cr} \right| \quad --- (3)$$
$$= \left| \sqrt{\frac{Lr}{Cr}} - \sqrt{\frac{Lr}{Cr}} \right| = 0$$

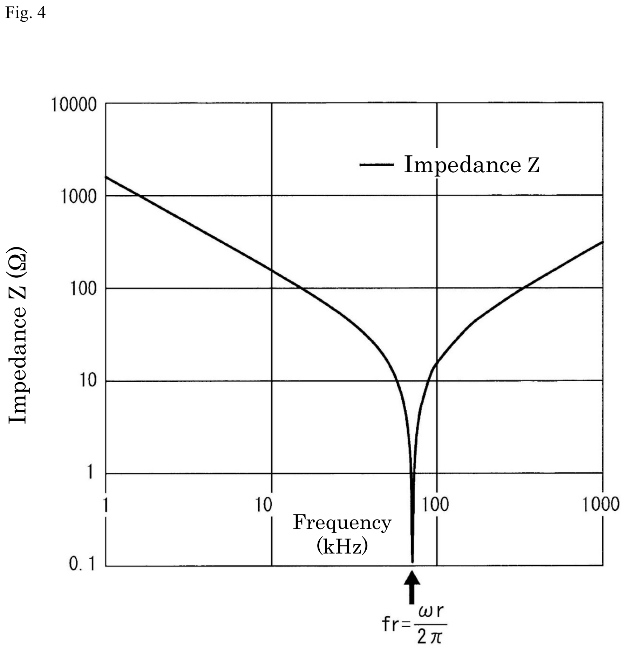

The angular frequency ωr at which the impedance Z is zero in this manner is referred to as a resonance angular frequency, and a resonance frequency fr is such that fr = ωr is /2π. As illustrated in Fig. 4, the impedance Z increases as the switching frequency becomes farther from the resonance frequency fr.

The fact that the impedance Z changes depending on the frequency means that the impedance also changes when viewed from the secondary side of the transformer T, and as illustrated in Fig. 3(c), the transformer T of the second stage can be expressed as an impedance variable equivalent circuit.

In particular, at the resonance frequency fr at which the impedance Z becomes zero, the transformer T of the second stage is short-circuited on the primary side, and the impedance also becomes zero on the secondary side as illustrated in Fig. 3(d). That is, in the transformer T of the second stage, the secondary winding N2 is also equivalent to a short circuit.

Therefore, the LLC circuit 10 of the first stage performs a switching operation near the most efficient resonance frequency fr, and the LLC circuit 10 of the second stage forms the series resonant circuit of the resonant inductor Lr and the resonant capacitor Cr. Then, as illustrated in Fig. 3(d), since the second stage can be regarded as being short-circuited, the power converter 1 can be regarded as only the LLC circuit 10 of the first stage. That is, it is possible without providing a changeover switch on the secondary side to switch between the series connection operation in which the LLC circuits 10 of the first stage and the second stage perform the switching operation and the independent operation in which only the LLC circuit 10 of the first stage performs the switching operation.

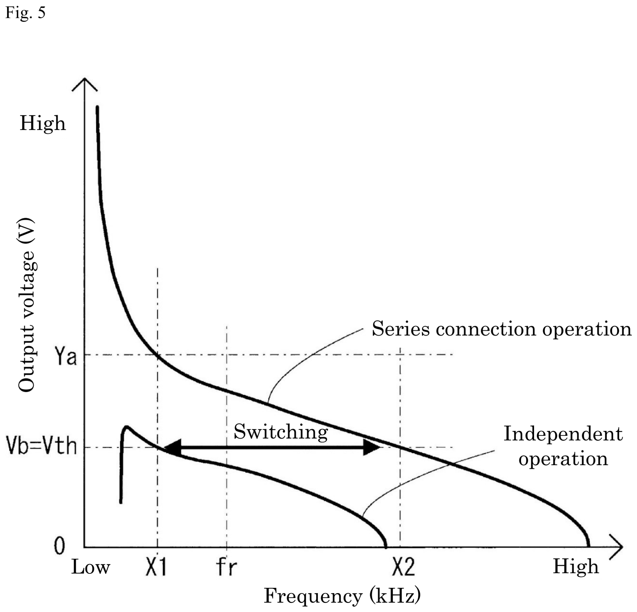

Fig. 5 is an example of output characteristics of the switching frequency and the output voltage Vo in the series connection operation and the independent operation. Referring to Fig. 5, the output voltage Vo at an identical frequency is lower in the independent operation than in the series connection operation. When X1 to X2 (X1 < X2) with the resonance frequency fr therebetween is set as an operating range (hereinafter, referred to as an operating frequency range) of the switching frequency, the output voltage Vo that can be output in the operating frequency range is Va to Vb (Va > Vb) in the series connection operation. The output voltage Vo in the independent operation is 1/2 of that in the series connection operation near the resonance frequency fr. The output voltage Vo in the independent operation becomes lower than 1/2 of that in the series connection operation due to the impedance Z as the frequency goes away from the resonance frequency fr. In the independent operation, the maximum frequency at which the output voltage Vo = 0 is suppressed as compared with that in the series connection operation.

By setting an appropriate threshold voltage Vth (for example, the output voltage Vo = Vb) and switching from the series connection operation to the independent operation when the voltage is less than the threshold voltage Vth, the range of the output voltage Vo that can be output in the operating frequency range is widened to the lower voltage side than the output voltage Vo = Vb.

The series resonant circuit of the resonant inductor Lr and the resonant capacitor Cr is formed with the upper switch element QH being in the always-off state and the lower switch element QL being in the always-on state, but may be formed with the upper switch element QH being in the always-on state and the lower switch element QL being in the always-off state. However, in this case, it is necessary to prepare another voltage for keeping the upper switch element QH in the always-on state.

In the independent operation, the LLC circuit 10 of the first stage may be the series resonant circuit of the resonant inductor Lr and the resonant capacitor Cr, and only the LLC circuit 10 of the second stage may be caused to perform the switching operation.

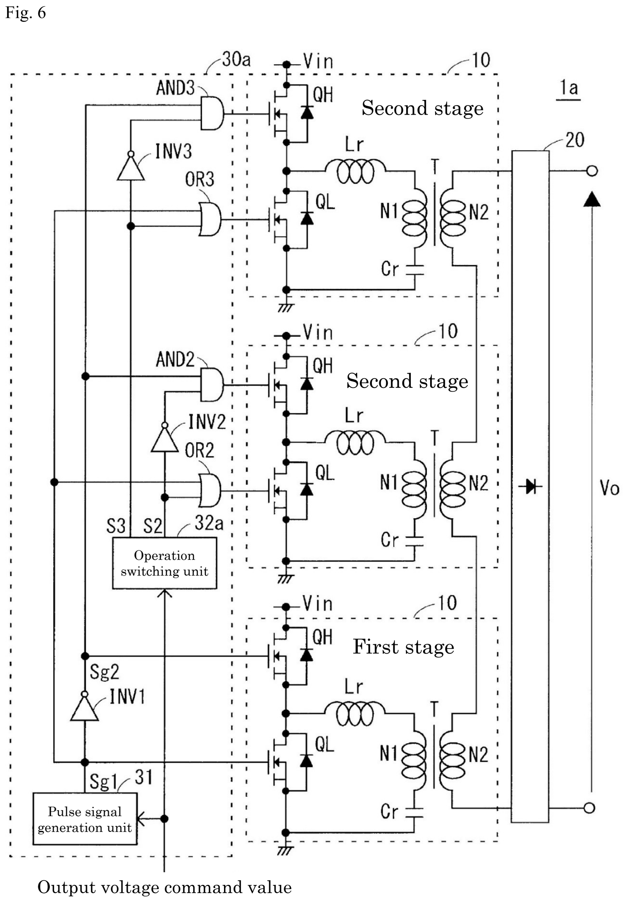

A power converter 1a illustrated in Fig. 6 has a three-stage configuration including LLC circuits 10 of three stages in which secondary windings N2 of transformers T are connected in series. The power converter 1a includes a control unit 30a that drives the LLC circuits 10 of the three stages.

The control unit 30a is a semiconductor device integrated on a semiconductor substrate, and generates pulse signals Sg1 and Sg2 for driving switching legs (upper switch elements QH and lower switch elements QL) of the LLC circuits 10 of the first to third stages based on an output voltage command value.

The control unit 30a includes a pulse signal generation unit 31 and an inverter circuit INV1. The pulse signal generation unit 31 generates the pulse signal Sg1 for driving the lower switch elements QL in the LLC circuits 10 of the first to third stages based on the output voltage command value. The inverter circuit INV1 inverts the pulse signal Sg1 and generates the pulse signal Sg2 for driving the upper switch elements QH in the LLC circuits 10 of the first to third stages. The pulse signal generation unit 31 decreases the output voltage Vo by increasing the switching frequency of the pulse signal Sg1 (pulse signal Sg2) and increases the output voltage Vo by decreasing the switching frequency by frequency control.

The control unit 30a includes an operation switching unit 32a, OR circuits OR2 and OR3, AND circuits AND2 and AND3, and inverter circuits INV2 and INV3. The operation switching unit 32a outputs a three-stage operation switching signal S3 that is at Low level when the output voltage command value is equal to or higher than a first threshold voltage Vth1 and is at Hi level when the output voltage command value is less than the first threshold voltage Vth1. The operation switching unit 32a outputs a two-stage operation switching signal S2 that is at Low level when the output voltage command value is equal to or higher than a second threshold voltage Vth2 lower than the first threshold voltage Vth1 and is at Hi level when the output voltage command value is less than the second threshold voltage Vth2.

In the OR circuit OR3, the pulse signal Sg1 is input to one input terminal, the three-stage operation switching signal S3 is input to the other input terminal, and an output terminal is connected to the lower switch element QL in the LLC circuit 10 of the third stage. In the AND circuit AND3, the pulse signal Sg1 is input to one input terminal, the three-stage operation switching signal S3 inverted by the inverter circuit INV3 is input to the other input terminal, and an output terminal is connected to the upper switch element QH in the LLC circuit 10 of the third stage.

In the OR circuit OR2, the pulse signal Sg1 is input to one input terminal, the two-stage operation switching signal S2 is input to the other input terminal, and an output terminal is connected to the lower switch element QL in the LLC circuit 10 of the second stage. In the AND circuit AND2, the pulse signal Sg1 is input to one input terminal, the two-stage operation switching signal S2 inverted by the inverter circuit INV2 is input to the other input terminal, and an output terminal is connected to the upper switch element QH in the LLC circuit 10 of the second stage.

When the output voltage command value is equal to or higher than the first threshold voltage Vth1, the three-stage operation switching signal S3 and the two-stage operation switching signal S2 are at Low level. Low level is input to the other input terminals of the OR circuits OR3 and OR2, and Hi level is input to the other input terminals of the AND circuits AND3 and AND2. Therefore, the upper switch elements QH and the lower switch elements QL in the LLC circuits 10 of the third stage and the second stage are driven by the pulse signal Sg2 and the pulse signal Sg1, respectively, similarly to the LLC circuit 10 of the first stage. The power converter 1 performs a three-circuit series connection operation in which all the LLC circuits 10 of the first to third stages connected in series perform a switching operation.

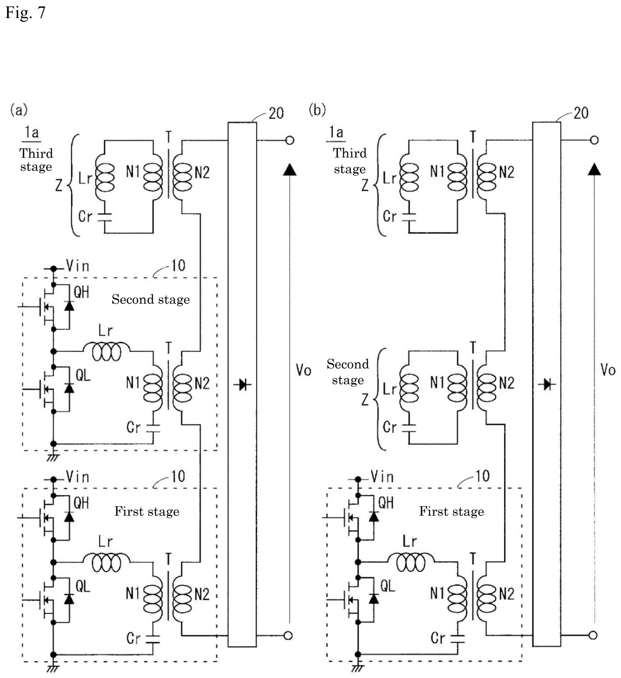

When the output voltage command value is less than the first threshold voltage Vth1 and equal to or higher than the second threshold voltage Vth2, the three-stage operation switching signal S3 is at Hi level, and the two-stage operation switching signal S2 is at Low level. Hi level is input to the other input terminal of the OR circuit OR3, and Low level is input to the other input terminal of the AND circuit AND2. Low level is input to the other input terminal of the OR circuit OR2, and Hi level is input to the other input terminal of the AND circuit AND3. Therefore, in the LLC circuit 10 of the third stage, the upper switch element QH is in an always-off state, and the lower switch element QL is in an always-on state. The upper switch element QH and the lower switch element QL in the LLC circuit 10 of the second stage are driven by the pulse signal Sg2 and the pulse signal Sg1, respectively, similarly to the LLC circuit 10 of the first stage. As illustrated in Fig. 7(a), the power converter 1 performs a two-circuit series connection operation in which the LLC circuit 10 of the third stage is a series resonant circuit of a resonant inductor Lr and a resonant capacitor Cr, and the LLC circuits 10 of the first stage and the second stage connected in series perform the switching operation.

When the output voltage command value is less than the second threshold voltage Vth2, the three-stage operation switching signal S3 and the two-stage operation switching signal S2 are at Hi level. Hi level is input to the other input terminal of the OR circuit OR2, and Low level is input to the other input terminal of the AND circuit AND2. Therefore, in the LLC circuits 10 of the third stage and the second stage, the upper switch elements QH are in the always-off state, and the lower switch elements QL are in the always-on state. As illustrated in Fig. 7(b), the power converter 1 performs the independent operation, in which each of the LLC circuits 10 of the third stage and the second stage is the series resonant circuit of the resonant inductor Lr and the resonant capacitor Cr, and only the LLC circuit 10 of the first stage performs the switching operation.

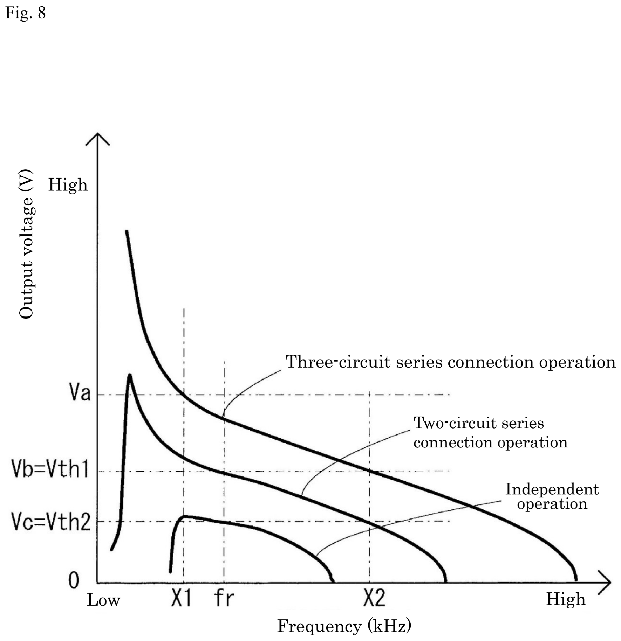

Fig. 8 is an example of output characteristics of the switching frequency and the output voltage Vo in the three-circuit series connection operation, the two-circuit series connection operation, and the independent operation. Referring to Fig. 8, at an identical frequency, the output voltage Vo is lower in the two-circuit series connection operation than in the three-circuit series connection operation, and further lower in the independent operation than in the two-circuit series connection operation. When X1 to X2 (X1 < X2) with a resonance frequency fr therebetween is set as the operating range, the output voltage Vo that can be output in the operating frequency range in the three-circuit series connection operation is Va to Vb (Va > Vb) in the example illustrated in Fig. 7. The output voltage Vo in the two-circuit series connection operation is 2/3 of that in the three-circuit series connection operation near the resonance frequency fr. The output voltage Vo in the two-circuit series connection operation becomes lower than 2/3 of that in the series connection operation due to an impedance Z as the frequency goes away from the resonance frequency fr. In the two-circuit series connection operation, the maximum frequency at which the output voltage Vo = 0 is suppressed as compared with that in the three-circuit series connection operation. The output voltage Vo that can be output in the operating frequency range in the two-circuit series connection operation is Vb to Vc (Vb > Vc) in the example illustrated in Fig. 8. The output voltage Vo in the independent operation is 1/2 of that in the two-circuit series connection operation near the resonance frequency fr. The output voltage Vo in the independent operation becomes lower than 1/2 of that in the two-circuit series connection operation due to two impedances Z as the frequency goes away from the resonance frequency fr. In the independent operation, the maximum frequency at which the output voltage Vo = 0 is further suppressed as compared with that in the two-circuit series connection operation.

The range of the output voltage Vo that can be output in the operating frequency range is widened to the lower voltage side than the output voltage Vo = Vb by switching from the three-circuit series connection operation to the two-circuit series connection operation when the voltage is less than an appropriate first threshold voltage Vth1 (for example, the output voltage Vo = Vb). The range of the output voltage Vo that can be output in the operating frequency range is further widened to the lower voltage side than the output voltage Vo = Vc by switching from the two-circuit series connection operation to the independent operation when the voltage is less than an appropriate second threshold voltage Vth2 (for example, the output voltage Vo = Vc).

In the independent operation, only the LLC circuit 10 of either the third stage or the second stage may be operated, and the other LLC circuits 10 may be the series resonant circuit of the resonant inductor Lr and the resonant capacitor Cr. In the two-circuit series connection operation, the LLC circuit 10 of either the second stage or the first stage may be the series resonant circuit of the resonant inductor Lr and the resonant capacitor Cr, and the LLC circuits 10 of the other two stages may be caused to perform the switching operation.

The number of stages N of the LLC circuit 10 may be 4 or more. When the LLC circuit 10 is in N stages, switching can be made to N types of operations including an N-circuit series connection operation, an (N-1)-circuit series connection operation, ..., and an independent operation.

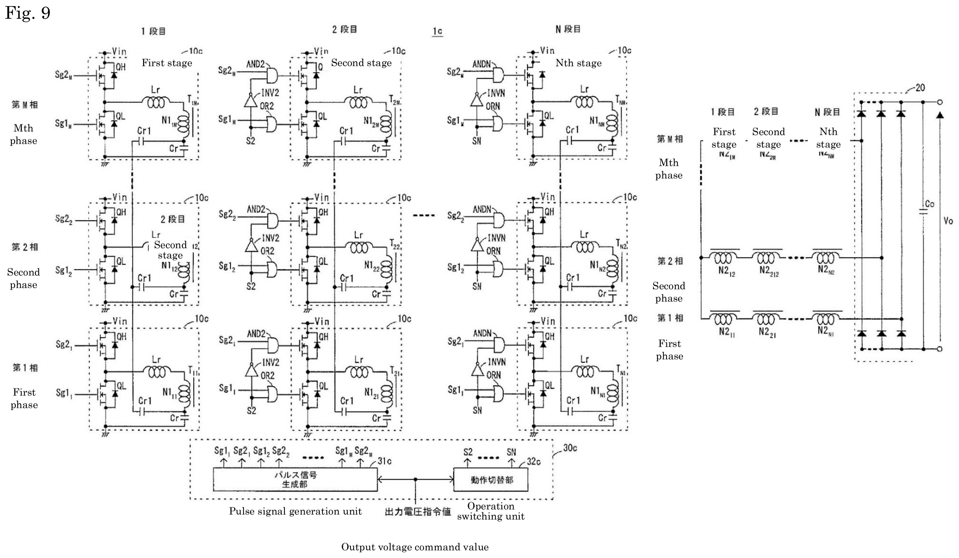

A multiphase LLC converter may be configured using the LLC circuits 10 of the N stages. A power converter 1c illustrated in Fig. 9 is an M-phase multiphase LLC converter including N $\times$ M half-bridge LLC converters (hereinafter, referred to as LLC circuits 10c). N and M are natural numbers of 2 or more.

In the power converter 1c, each phase includes the LLC circuits 10c of N stages in which secondary windings N2 of transformers T are connected in series, and the first to Mth phases are switched at a phase difference of 360°/M.

The LLC circuit 10c includes an interphase connection resonant capacitor CR1 having one end connected to a connection point between a primary winding N1 of the transformer T and a resonant capacitor Cr, in addition to the configuration of the LLC circuit 10. The other end of the interphase connection resonant capacitor CR1 is connected to the other end of the interphase connection resonant capacitor CR1 included in the LLC circuit 10c of an identical stage.

The power converter 1c includes a control unit 30c. The control unit 30c is a semiconductor device integrated on a semiconductor substrate. The control unit 30c includes a pulse signal generation unit 31c that generates pulse signals $Sg2_1$ to $Sg2_M$ and $Sg1_1$ to $Sg1_M$ for driving upper switch elements QH and lower switch elements QL of the first to Mth phases with a phase difference of 360°/M based on an output voltage command value.

The power converter 1c includes an operation switching unit 32c. The operation switching unit 32c outputs a two-stage operation switching signal S2 to an N-stage operation switching signal SN for respectively switching operations of the second stage to the Nth stage according to the output voltage command value. As for the two-stage operation switching signal S2 to the N-stage operation switching signal SN, when an n-stage operation switching signal Sn is at Low level, the LLC circuits 10c of the n (natural number of 2 to N)th stage are driven by pulse signals $Sg2_n$ and $Sg1_n$ similarly to the first stage. The LLC circuit 10c of the nth stage forms a series resonant circuit of the resonant inductor Lr and the resonant capacitor Cr when the n-stage operation switching signal Sn is at Hi level.

Currents flowing through secondary windings $N2_{1m}$ to $N2_{Nm}$ of the first to Nth stages of the m (natural number of 1 to M)th phase are identical because the secondary windings are connected in series. That is, currents (currents in the row direction illustrated in Fig. 9) flowing through primary windings $N1_{1m}$ to $N1_{Nm}$ of the first to Nth stages of the m (natural number of 1 to M)th phase are identical. Currents (currents in the column direction illustrated in Fig. 9) flowing through primary windings $N1_{n1}$ to $N1_{nM}$ of the nth stage are balanced by the interphase connection resonant capacitor CR1. Therefore, currents are balanced in all the LLC circuits 10c.

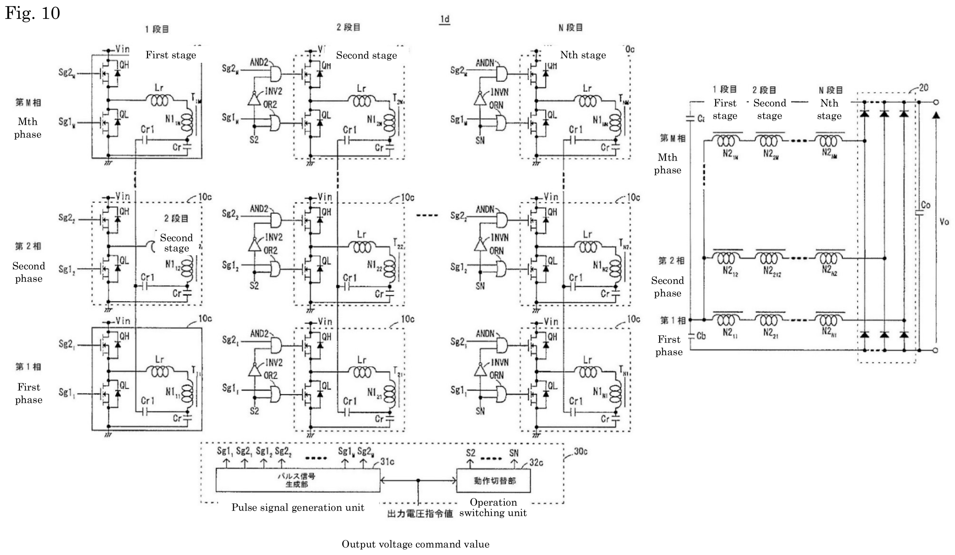

A power converter 1d illustrated in Fig. 10 includes capacitors Ca and Cb for voltage doubler rectification in addition to the configuration of the power converter 1c. Both of the capacitors Ca and Cb may be provided, or only one of them may be provided.

(Summary)

(1) The power converters 1, 1a, 1c, and 1d according to the embodiments of the present invention convert the direct-current voltage Vin into the output voltage Vo using the LLC circuit 10 (LLC converter). The LLC circuit 10 includes the upper switch element QH and the lower switch element QL connected in series between the positive electrode and the negative electrode of the direct-current voltage Vin. The LLC circuit 10 includes the resonant inductor Lr connected to the connection point between the upper switch element QH and the lower switch element QL, the primary winding N1 of the transformer T, and the resonant capacitor Cr. The power converters 1, 1a, 1c, and 1d convert the direct-current voltage Vin into the output voltage Vo by the switching operation of the upper switch element QH and the lower switch element QL using the LLC circuit 10. The power converters 1, 1a, 1c, and 1d include the LLC circuit 10 of each of a plurality of stages in which the secondary windings N2 of the transformers T are connected in series. The power converters 1, 1a, 1c, and 1d include the control unit 30 that causes the series resonant circuit of the resonant inductor Lr and the resonant capacitor Cr to be formed in any one or more of the LLC circuits 10 of the plurality of stages and causes the other LLC circuit 10 to perform the switching operation when the output voltage Vo is less than the threshold voltage Vth.

According to the power converters 1, 1a, 1c, and 1d according to (1), since the range of the output voltage Vo that can be output in the operating frequency range can be widened without providing a changeover switch on the output side, the operating frequency range can be set to a narrow range near the resonance frequency, and the conversion efficiency can be improved.

(2) In the power converters 1, 1a, 1c, and 1d according to (1), the control unit 30 causes the series resonant circuit to be formed when the output voltage command value of the output voltage Vo is less than the threshold voltage Vth.

According to the power converters 1a, 1c, and 1d according to (2), the operating frequency at a low-voltage output can be suppressed.

(3) In the power converters 1, 1a, 1c, and 1d according to (1) or (2), the control unit 30 causes the series resonant circuit of the resonant inductor Lr and the resonant capacitor Cr to be formed by bringing one of the upper switch element QH and the lower switch element QL into the always-on state and the other into the always-off state.

According to the power converters 1a, 1c, and 1d according to (3), the series resonant circuit of the resonant inductor Lr and the resonant capacitor Cr can be formed by simple control of the upper switch element QH and the lower switch element QL.

(4) In the power converters 1c and 1d of (1) to (3), a multiphase LLC converter of a plurality of phases is configured by using, as one phase, the LLC circuits 10c of the plurality of stages in which the secondary windings N2 are connected in series. The LLC circuit 10c includes the interphase connection resonant capacitor Cr1 having one end connected to the connection point between the primary winding N1 and the resonant capacitor Cr. The other end of the interphase connection resonant capacitor Cr1 is connected to the other end of the interphase connection resonant capacitor Cr1 included in the LLC circuit 10c of an identical stage.

According to the power converters 1c and 1d according to (4), the range of the output voltage Vo that can be output in the operating frequency range can be widened without providing a changeover switch on the output side, and currents can be balanced in the phases.

(5) A method for controlling the power converters 1, 1a, 1c, and 1d according to the embodiments of the present invention is a method for controlling the power converters 1, 1a, 1c, and 1d that convert the direct-current voltage Vin into the output voltage Vo by a switching operation of the LLC circuit 10 (LLC converter). The LLC circuit 10 includes the upper switch element QH and the lower switch element QL connected in series between the positive electrode and the negative electrode of the direct-current voltage Vin. The LLC circuit 10 includes the resonant inductor Lr connected to the connection point between the upper switch element QH and the lower switch element QL, the primary winding N1 of the transformer T, and the resonant capacitor Cr. The power converters 1, 1a, 1c, and 1d convert the direct-current voltage Vin into the output voltage Vo by the switching operation of the upper switch element QH and the lower switch element QL using the LLC circuit 10. The power converters 1, 1a, 1c, and 1d include the LLC circuit 10 of each of a plurality of stages in which the secondary windings N2 of the transformers T are connected in series. The power converters 1, 1a, 1c, and 1d form the series resonant circuit of the resonant inductor Lr and the resonant capacitor Cr in any one or more of the LLC circuits 10 of the plurality of stages, and perform the switching operation on the other LLC circuit 10.

According to the method for controlling the power converters 1, 1a, 1c, and 1d according to (5), since the range of the output voltage Vo that can be output in the operating frequency range can be widened without providing a changeover switch on the output side, the operating frequency range can be set to a narrow range near the resonance frequency, and the conversion efficiency can be improved.

(6) A battery charger that charges the storage battery 3, in which the storage battery 3 is charged by the output voltage Vo of the power converters 1, 1a, 1c, and 1d of (1) to (4).

According to the battery charger according to (6), since the range of the output voltage Vo that can be output in the operating frequency range can be widened, the operating frequency range can be set to a narrow range near the resonance frequency, and the storage battery 3 can be efficiently charged.

(7) The vehicle 2 on which the storage battery 3 is mounted includes the power converters 1, 1a, 1c, and 1d of (1) to (4) that convert power supplied from the outside into the output voltage Vo for charging the storage battery 3.

According to the vehicle 2 according to (7), since the range of the output voltage Vo that can be output in the operating frequency range can be widened, the operating frequency range can be set to a narrow range near the resonance frequency, and the mounted storage battery 3 can be efficiently charged.

Although the present invention has been described above with reference to the specific embodiments, it is needless to say that the above-described embodiments are examples and can be modified and implemented within a scope not departing from the spirit of the present invention.

DESCRIPTION OF REFERENCE SIGNS

1, 1a, 1c, 1d: Power converter
2: Vehicle
3: Storage battery
10, 10c: Half-bridge LLC converter (LLC circuit)
20: Rectifier
30, 30a, 30b, 30c: Control unit
31, 31c: Pulse signal generation unit
32, 32a, 32b, 32c: Operation switching unit
100: Power converter
Cr: Resonant capacitor
Cr1: Interphase connection resonant capacitor
Lr: Resonant inductor
QH: Upper switch element
QL: Lower switch element
T: Transformer

**Claims**

1.  A power converter that converts a direct-current voltage into an output voltage by a switching operation of an upper switch element and a lower switch element using an LLC converter including the upper switch element and the lower switch element connected in series between a positive electrode and a negative electrode of the direct-current voltage, a resonant inductor connected to a connection point between the upper switch element and the lower switch element, a primary winding of a transformer, and a resonant capacitor, the power converter comprising:

    the LLC converter of each of a plurality of stages in which secondary windings of the transformers are connected in series; and
    a control unit that causes a series resonant circuit of the resonant inductor and the resonant capacitor to be formed in any one or more of the LLC converters of the plurality of stages and causes the other LLC converter to perform the switching operation.

2. The power converter according to claim 1, wherein the control unit causes the series resonant circuit to be formed when an output voltage command value of the output voltage is less than a threshold voltage.

3. The power converter according to claim 1 or 2, wherein the control unit causes the series resonant circuit of the resonant inductor and the resonant capacitor to be formed by bringing one of the upper switch element and the lower switch element into an always-on state and the other into an always-off state.

4. The power converter according to claim 1 or 2, wherein

a multiphase LLC converter of a plurality of phases is configured by using, as one phase, the LLC converters of the plurality of stages in which the secondary windings are connected in series,
the LLC converter includes an interphase connection resonant capacitor having one end connected to a connection point between the primary winding and the resonant capacitor, and
the other end of the interphase connection resonant capacitor is connected to the other end of the interphase connection resonant capacitor included in the LLC converter of an identical stage.

5. A method for controlling a power converter that converts a direct-current voltage into an output voltage by a switching operation of an upper switch element and a lower switch element using an LLC converter including the upper switch element and the lower switch element connected in series between a positive electrode and a negative electrode of the direct-current voltage, a resonant inductor connected to a connection point between the upper switch element and the lower switch element, a primary winding of a transformer, and a resonant capacitor,

the power converter including the LLC converter of each of a plurality of stages in which secondary windings of the transformers are connected in series, the method comprising
forming a series resonant circuit of the resonant inductor and the resonant capacitor in any one or more of the LLC converters of the plurality of stages, and performing the switching operation on the other LLC converter.

6. A battery charger that charges a storage battery, the battery charger comprising
the power converter according to claim 1 or 2 that converts the direct-current voltage into the output voltage for charging the storage battery.

7. A vehicle on which a storage battery is mounted, the vehicle comprising
the power converter according to claim 1 or 2 that converts power supplied from outside the vehicle into the output voltage for charging the storage battery.

Fig. 1

(a)

(b)

Fig. 2

Fig. 3

Fig. 4

Fig. 5

Fig. 6

Output voltage command value

Fig. 7

Fig. 8

Fig. 9

Fig. 10

Fig. 11

(a)

(b)

Fig. 12

EP 4 697 579 A1

## INTERNATIONAL SEARCH REPORT

| International application No. |
|---|
| **PCT/JP2024/014075** |

**A. CLASSIFICATION OF SUBJECT MATTER**

*H02M 3/28*(2006.01)i
FI: H02M3/28 H; H02M3/28 Q; H02M3/28 W

According to International Patent Classification (IPC) or to both national classification and IPC

**B. FIELDS SEARCHED**

Minimum documentation searched (classification system followed by classification symbols)

H02M3/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2022-15029 A (OMRON CORPORATION) 21 January 2022 (2022-01-21) paragraphs [0027]-[0058], [0064], [0068]-[0079], fig. 1-2, 5, 8-9 | 1-2, 5 |
| Y | | 6-7 |
| A | | 3-4 |
| Y | WO 2017/169042 A1 (SONY CORPORATION) 05 October 2017 (2017-10-05) paragraphs [0015], [0049], fig. 1, 8 | 6-7 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **11 June 2024** | **18 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

| International application No. |
| PCT/JP2024/014075 |

| Patent document cited in search report | | | Publication date (day/month/year) | Patent family member(s) | | | Publication date (day/month/year) |
|---|---|---|---|---|---|---|---|
| JP | 2022-15029 | A | 21 January 2022 | US paragraphs [0048]-[0078], [0084], [0088]-[0099], fig. 1-2, 5, 8-9 | 2023/0223856 | A1 | |
| | | | | WO | 2022/009818 | A1 | |
| | | | | EP | 4181378 | A1 | |
| | | | | CN | 115836469 | A | |
| WO | 2017/169042 | A1 | 05 October 2017 | US paragraphs [0039], [0073], fig. 1, 8 | 2019/0101967 | A1 | |
| | | | | CN | 108781042 | A | |

Form PCT/ISA/210 (patent family annex) (July 2022)

24

**EP 4 697 579 A1**

**Patent documents cited in the description**

- JP 2012249375 A